# DEMANDE DE BREVET EUROPEEN

(11) **EP 1 371 427 A1**
(43) Date de publication de la demande: **17.12.2003**
(21) Numéro de dépôt: 02291485.7
(22) Date de dépôt: 14.06.2002
(51) Int. Cl.: B09B 1/00, F17D 1/02

(54) **Dispositif de captage de gaz**

(71) Demandeur: Chopier, Frédéric, 44230 Saint Sebastien sur Loire (FR)
(72) Inventeur: Chopier, Frédéric, 44230 Saint Sebastien sur Loire (FR)
(74) Mandataire: Laget, Jean-Loup

(57) **Abrégé**

L'invention concerne un dispositif semi-enterré de captage de gaz du type constitué d'une colonne (1) présentant à sa partie supérieure un orifice (2) d'accès, cette colonne étant délimitée par une paroi (3) périphérique tubulaire munie d'orifices (4) d'admission des gaz.

Ce dispositif est caractérisé en ce que la colonne (1), fermée à sa base par un élément (6) de fond, comporte au voisinage de sa base des moyens de raccordement à un circuit de distribution ou d'évacuation de fluide par écoulement gravitaire, de telle sorte que la colonne forme, en position intercalée dans le circuit, une chambre d'inspection assurant, parallèlement à la continuité hydraulique des effluents, l'évacuation des condensats de gaz.

Application : sites de stockage de déchets.

## Description

La présente invention concerne un dispositif semi-enterré de captage de gaz, en particulier de biogaz, notamment à l'intérieur de sites aménagés de stockage de déchets par enfouissement.

Elle concerne plus particulièrement un dispositif semi-enterré de captage de gaz du type constitué d'une colonne présentant à sa partie supérieure un orifice d'accès à travers lequel il est possible d'inspecter la colonne, cette colonne étant délimitée par une paroi périphérique tubulaire munie d'orifices d'admission des gaz à travers lesquels les gaz peuvent être entraînés par aspiration dans la colonne en direction d'un conduit d'échappement raccordable à ladite colonne en vue de leur évacuation de la colonne.

Pour préserver l'environnement, de nombreux déchets sont aujourd'hui enfouis dans le sol. Cet enfouissement est réalisé dans des sites aménagés à cet effet. Pour ce faire, on pratique dans le sol une série d'excavations aptes à délimiter une succession de casiers dont les parois et le fond sont traités, notamment par recouvrement de membranes, en vue d'éviter une communication du contenu du casier avec le sous-sol. Les déchets sont ensuite disposés généralement en vrac ou sous forme de balles à l'intérieur du casier. Une fois le casier rempli, il est recouvert d'un élément de fermeture isolant le contenu du casier d'avec l'atmosphère. Toutefois, pour éviter l'accumulation de gaz, en particulier de biogaz résultant de processus de fermentation et de dégradation des déchets à l'intérieur des casiers, chaque casier est pré-équipé d'un dispositif de captage de gaz du type précité. La colonne de ce dispositif de captage est généralement raccordée, par l'intermédiaire d'un conduit d'échappement, à une torche assurant l'élimination par combustion des gaz produits. L'expérience a montré que de tels dispositifs se révèlent rapidement inefficaces en raison du remplissage dans le temps de la colonne par les condensats de gaz. En effet, les gaz produits présentent une température voisine de 70° en entrée de colonne. Ils tendent à se refroidir dans la conduite d'échappement les amenant à la torchère, se condensent et retombent dans ladite colonne. Bien que cette colonne soit ouverte à sa base, elle repose sur des déchets stockés de manière la plus compacte possible de sorte que les condensats ne peuvent s'écouler de la colonne et remplissent cette dernière jusqu'à la rendre totalement inefficace. Or, la législation impose à de tels sites une durée de vie au moins égale à 30 ans. Il est dont nécessaire, sur les sites actuels, de procéder régulièrement à la vidange des colonnes.

Un premier but de la présente invention est de proposer un dispositif semi-enterré de captage de gaz dont la conception permet de réduire la maintenance, notamment en se dispensant d'opérations régulières de pompage du contenu de la colonne.

Un autre but de la présente invention est de proposer un dispositif semi-enterré de captage de gaz dont la conception permet de rendre compatible la durée de fonctionnement d'un tel dispositif avec la durée de vie d'un site.

A cet effet, l'invention a pour objet un dispositif semi-enterré de captage de gaz, en particulier de biogaz, notamment à l'intérieur de sites aménagés de stockage de déchets par enfouissement, ce dispositif étant constitué d'une colonne présentant à sa partie supérieure un orifice d'accès à travers lequel il est possible d'inspecter la colonne, cette colonne étant délimitée par une paroi périphérique tubulaire munie d'orifices d'admission des gaz à travers lesquels les gaz peuvent être entraînés par aspiration dans la colonne en direction d'un conduit d'échappement raccordable à ladite colonne en vue de leur évacuation de la colonne, caractérisé en ce que la colonne, fermée à sa base par un élément de fond, comporte au voisinage de sa base des moyens de raccordement à un circuit de distribution ou d'évacuation de fluide, notamment d'effluents liquides par écoulement gravitaire, organisé de préférence à disposition rayonnante autour de ladite colonne, de telle sorte que la colonne forme, en position intercalée dans le circuit, une chambre d'inspection assurant, parallèlement à la continuité hydraulique des effluents liquides, l'évacuation des condensats de gaz.

La conception de la colonne, munie à la fois d'orifices d'admission de gaz et de moyens, tels que des ouvertures de raccordement à un circuit de fluide, permet l'obtention d'une colonne assurant à la fois la continuité hydraulique des effluents liquides du site et leur collecte ainsi que la collecte des condensats de gaz.

En outre, la fonction d'inspection de la chambre, notamment par vidéo-inspection, peut permettre, en une seule opération d'inspection, de contrôler d'une part les opérations de captage et d'élimination des effluents, tels que les lixiviats du site, d'autre part les opérations de captage et d'élimination des gaz. Il en résulte à nouveau une réduction du temps de maintenance d'un tel site.

L'invention sera bien comprise à la lecture de la description suivante d'exemples de réalisation, en référence aux dessins annexés dans lesquels :
la figure 1 représente une vue schématique partielle en perspective d'un dispositif de captage de gaz conforme à l'invention
la figure 2 représente une vue schématique en coupe partielle de la base du dispositif de captage conforme à l'invention et
la figure 3 représente une vue schématique partielle en perspective d'une variante de la base du dispositif de captage conforme à l'invention.

Comme mentionné ci-dessus, le dispositif de captage de gaz, objet de l'invention, est plus particulièrement destiné à être semi-enterré à l'intérieur de sites aménagés de stockage de déchets par enfouissement. Ce dispositif est constitué, de manière en soi connue, d'une colonne 1 présentant à sa partie supérieure un orifice 2 d'accès à travers lequel il est possible d'inspecter la colonne. Cette colonne est délimitée par une paroi 3 périphérique tubulaire munie d'orifices 4 d'admission des gaz à travers lesquels les gaz peuvent être entraînés par aspiration dans la colonne 1 en direction d'un conduit 5 d'échappement raccordable à ladite colonne en vue de leur évacuation de la colonne.

Dans les exemples représentés, seule une partie de ce conduit 5 d'échappement a été représentée. Il constitue dans ce cas un départ en attente d'un conduit de raccordement muni généralement d'un dispositif d'aspiration tel qu'une turbine. Ce conduit de raccordement achemine généralement les gaz vers un dispositif de combustion des gaz, tel qu'une torche, en vue d'assurer l'élimination de ces derniers.

Cette colonne 1 est fermée à sa base par un élément 6 de fond dont le rôle peut être assimilé à celui d'une cunette. Cette colonne 1 comporte encore, au voisinage de sa base, des moyens de raccordement à un circuit de distribution ou d'évacuation de fluide par écoulement gravitaire. La colonne forme ainsi, en position intercalée dans le circuit, une chambre d'inspection, notamment de vidéo inspection, assurant, parallèlement à la continuité hydraulique des effluents, l'évacuation des condensats du biogaz.

Les moyens de raccordement de la colonne au circuit de distribution ou d'évacuation du fluide peuvent être divers et variés. Dans les exemples représentés, la paroi périphérique de la colonne comporte, au voisinage de sa base, une seconde série d'ouvertures 7 constituant un départ en attente pour le raccordement d'un conduit d'entrée ou de sortie 8 de fluide. Ces ouvertures sont ménagées de sorte que les conduits d'entrée ou de sortie de fluide sont à disposition rayonnante autour de la colonne.

Dans l'exemple représenté, une portion du conduit de sortie 8 de fluide pré-équipe une ouverture 7 de la colonne de manière à faciliter le raccordement ultérieur de cette ouverture à un conduit de fluide menant par exemple à une station de traitement des lixiviats.

Dans un autre mode de réalisation non représenté, la colonne aurait pu comporter, au voisinage de sa base sur la face externe de sa paroi périphérique, des marquages de repérage des orifices à percer pour le raccordement des conduites d'entrée ou de sortie de fluide.

Les conduites d'entrée des effluents liquides sont quant à elles généralement réalisées sous forme de drain apte à collecter à l'intérieur du site l'ensemble des effluents circulant au fond de ce dernier. La présence de ces effluents peut être notamment due à un traitement par injection au sein des déchets du site. Il a en effet été constaté que ce traitement par injection permet de favoriser la dégradation des déchets dans le temps et de contrôler cette dégradation.

Le dispositif de captage est donc ainsi en position de fonctionnement raccordé d'une part directement à une station de traitement des effluents liquides, d'autre part à une station de traitement des gaz telle qu'une torche. Ainsi, tous les éléments du site de collecte de déchets, tels que les gaz ou les effluents, aptes à générer une pollution de l'environnement, sont éliminés à travers ladite colonne, cette élimination pouvant être contrôlée à tout moment, notamment par vidéo inspection.

Pour faciliter le maintien en position verticale de la colonne en position installée dans les sites aménagés de stockage des déchets, la colonne peut être doublée extérieurement sur au moins une partie de sa hauteur par une paroi 11, de préférence coaxiale à la paroi périphérique de l'enveloppe. Cette paroi 11 est maintenue écartée de la paroi 3 périphérique de la colonne 1 pour délimiter, dans l'espace interpariétal, une chambre annulaire ouverte par le dessus formant chambre de lestage après mise en place du dispositif dans le site à traiter. En effet, cette chambre annulaire peut être remplie de graviers ou de tout autre matériau disponible sur le site pour coopérer au maintien à l'état dressé de la colonne.

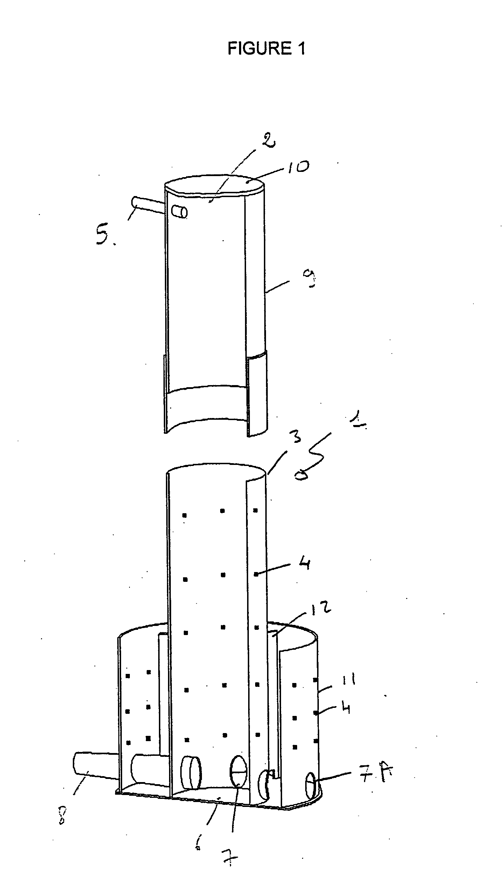

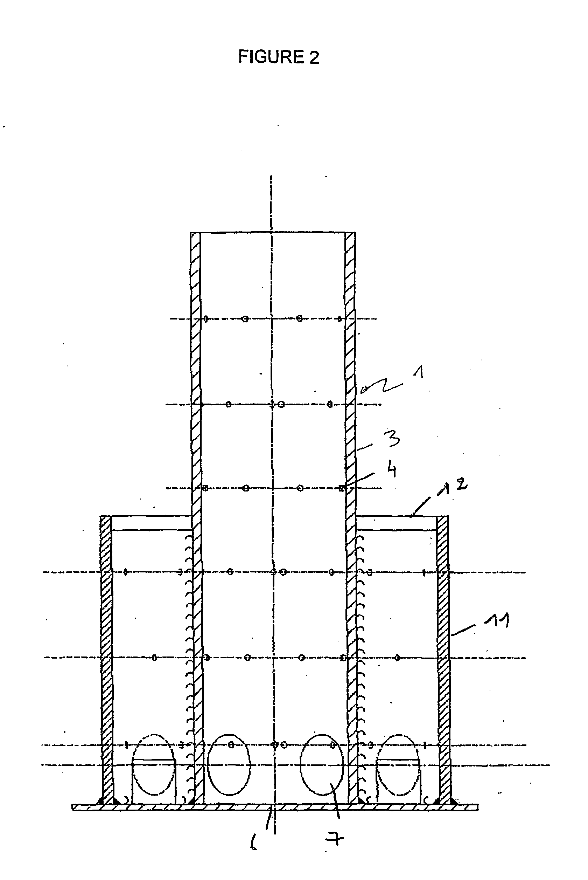

Dans les exemples représentés aux figures 1 et 2, la paroi 11 périphérique externe entourant la colonne 1 est maintenue écartée de la paroi 3 périphérique de la colonne par l'intermédiaire d'entretoises 12 radiales et/ou d'un élément fermant le fond de la chambre de lestage. Lorsque cette paroi 11 de doublement de la colonne est présente, cette paroi, entourant ladite colonne, est munie d'une part d'orifices 4 d'admission des gaz, similaires à ceux équipant la paroi périphérique de la colonne, d'autre part d'ouvertures ou de marquage de repérage d'orifices à percer ménagés en correspondance des ouvertures 7 de la colonne servant au raccordement de conduite d'entrée ou de sortie des effluents liquides. Dans les exemples représentés, la paroi 11 périphérique externe comporte des ouvertures 7A ménagées en correspondance des ouvertures 7 de la paroi 3 périphérique de la colonne.

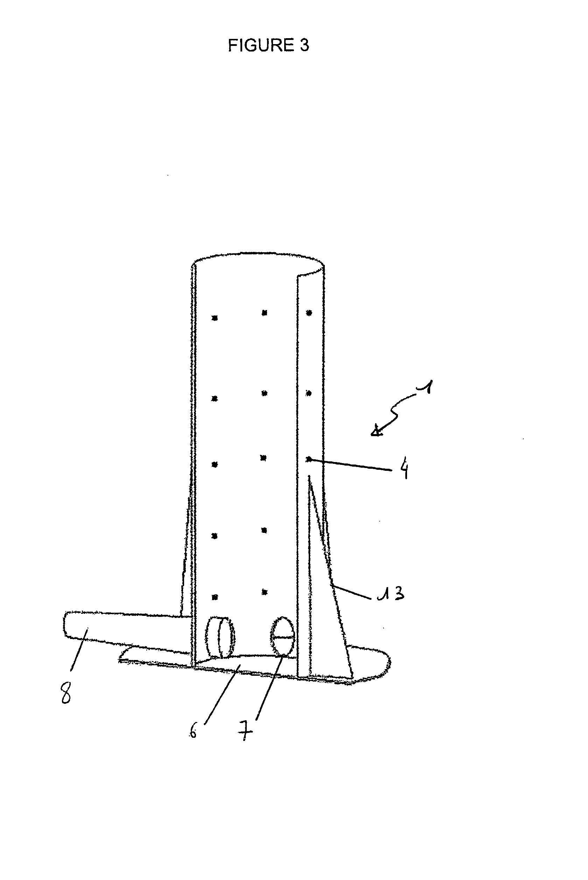

Dans un autre mode de réalisation représenté à la figure 3, la paroi 11 est supprimée. La colonne est simplement munie sur son pourtour d'éléments 13 de contreventement de type gousset.

La colonne est encore munie à sa base d'une embase affectant la forme d'une platine 6 s'étendant en débord de la paroi périphérique de la colonne, cette platine 6 assurant le maintien à l'état dressé de la colonne et empêchant tout endommagement des géomembranes du fond du site de collecte de déchets destiné à recevoir la colonne. En effet, comme mentionné ci-dessus, les fonds et les parois du site de collecte de déchets ayant été préalablement traités notamment par recouvrement au moyen de membranes, il est nécessaire d'aménager la base de la colonne de sorte que celle-ci n'entraîne pas, lors de son appui sur le fond du site de collecte de déchets, une perforation des aménagements de ce site.

Dans les exemples représentés, l'embase de la colonne constitue simultanément une surface de réception et éventuellement de maintien de la paroi de doublement de la colonne constituée d'une section de conduit tubulaire entourant la paroi périphérique de la colonne. En effet, en cas de présence d'entretoises 12, la paroi 11 de doublement de la colonne pourra simplement reposer en appui sur la platine 6. Dans un autre mode de réalisation, le bord de cette paroi 11 en appui sur la platine 6 pourra être soudé à la platine 6. Dans l'exemple représenté à la figure 3, la platine 6 sert, si nécessaire, d'assise aux éléments 13 de contreventement.

Dans les exemples représentés, pour des raisons de simplification de la construction, la platine 6 et l'élément 6 de fond de la colonne sont réalisés d'une seule pièce. Toutefois, la colonne 1 aurait pu être fermée au moyen d'un élément de fond indépendant de la platine 6. Cet élément de fond aurait alors pu être profilé de manière à faciliter la continuité hydraulique des effluents à l'intérieur de ladite colonne.

La colonne 1, dont la hauteur peut être ajustée, notamment par utilisation d'une ou plusieurs rehausse(s) constituée(s) de sections de conduit tubulaire muni d'orifices 3 d'admission, est fermée à sa partie supérieure par un élément de tête 9 délimitant l'orifice 2 d'accès à la colonne. Cet élément de tête, assemblable au reste du corps de colonne généralement par emboîtement, affecte la forme d'une section de conduit tubulaire, délimité au moyen d'une paroi de préférence pleine, cet élément de tête étant fermé à l'une de ses extrémités, servant à la délimitation de l'orifice d'accès, par un couvercle ou tampon 10 de fermeture destiné à être placé au ras du sol. Cet élément de tête comporte encore une dérivation 5 pour son raccordement à une conduite d'échappement par aspiration.

Bien évidemment, l'ensemble des éléments constituant ce dispositif de captage sont réalisés en matière de synthèse, de préférence en polyéthylène haute densité pour permettre une durée de vie du dispositif voisine d'une trentaine d'années. En effet, jusqu'à présent, les dispositifs de captage étaient réalisés en béton, entraînant une dégradation de l'installation généralement au bout de 10 ans, dégradation obtenue sous l'effet de l'action des gaz.

## Revendications

1. Dispositif semi-enterré de captage de gaz, en particulier de biogaz, notamment à l'intérieur de sites aménagés de stockage de déchets par enfouissement, ce dispositif étant constitué d'une colonne (1) présentant à sa partie supérieure un orifice (2) d'accès à travers lequel il est possible d'inspecter la colonne, cette colonne étant délimitée par une paroi (3) périphérique tubulaire munie d'orifices (4) d'admission des gaz à travers lesquels les gaz peuvent être entraînés par aspiration dans la colonne (1) en direction d'un conduit (5) d'échappement raccordable à ladite colonne en vue de leur évacuation de la colonne,
**caractérisé en ce que** la colonne (1), fermée à sa base par un élément (6) de fond, comporte au voisinage de sa base des moyens de raccordement à un circuit de distribution ou d'évacuation de fluide notamment des effluents liquides par écoulement gravitaire organisé de préférence à disposition rayonnante autour de ladite colonne, de telle sorte que la colonne forme, en position intercalée dans le circuit, une chambre d'inspection assurant, parallèlement à la continuité hydraulique des effluents, l'évacuation des condensats de gaz.

2. Dispositif selon la revendication 1,
**caractérisé en ce que** la paroi périphérique de la colonne comporte, au voisinage de sa base, une seconde série d'ouvertures (7) constituant un départ en attente pour le raccordement d'un conduit d'entrée ou de sortie (8) de fluide, lesdites ouvertures étant ménagées de sorte que les conduits d'entrée ou de sortie de fluide sont à disposition rayonnante autour de la colonne.

3. Dispositif selon la revendication 1,
**caractérisé en ce que** la colonne comporte, au voisinage de sa base sur la face externe de sa paroi périphérique, des marquages de repérage des orifices à percer pour le raccordement de conduites d'entrée ou de sortie de fluide.

4. Dispositif selon l'une des revendications 1 à 3,
**caractérisé en ce que** la colonne est doublée extérieurement sur au moins une partie de sa hauteur par une paroi (11), de préférence coaxiale, maintenue écartée de la paroi (3) périphérique de la colonne pour délimiter dans l'espace interpariétal une chambre annulaire ouverte par le dessus formant chambre de lestage après mise en place du dispositif dans le site à traiter.

5. Dispositif selon la revendication 4,
**caractérisé en ce que** la paroi (11) périphérique externe entourant ladite colonne (1) est maintenue écartée de la paroi (3) périphérique de la colonne par l'intermédiaire d'entretoises (12) radiales et/ou d'un élément fermant le fond de ladite chambre de lestage.

6. Dispositif selon l'une des revendications 4 et 5,
**caractérisé en ce que** la paroi (11) entourant ladite colonne est munie d'une part d'orifices (4) d'admission des gaz, d'autre part d'ouvertures (7A) ou de marquage de repérage d'orifices à percer ménagés en correspondance d'ouvertures (7) de la colonne servant au raccordement de conduites d'entrée ou de sortie de fluide.

7. Dispositif selon l'une des revendications 1 à 6,
**caractérisé en ce que** la colonne (1) est munie à sa base d'une embase affectant la forme d'une platine (6) s'étendant en débord de la paroi (3) périphérique de la colonne, cette platine assurant le maintien à l'état dressé de la colonne et empêchant tout endommagement du fond du site de collecte de déchets destiné à recevoir ladite colonne.

8. Dispositif selon la revendication 7,
**caractérisé en ce que** l'embase de la colonne constitue simultanément une surface de réception et éventuellement de maintien d'une paroi (11) de doublement de la colonne constituée d'une section de conduit tubulaire entourant la paroi (3) périphérique de la colonne.

9. Dispositif selon l'une des revendications 7 et 8,
**caractérisé en ce que** la platine (6) et l'élément (6) de fond de la colonne sont réalisés d'une seule pièce.

10. Dispositif selon l'une des revendications 1 à 9,
**caractérisé en ce que** l'orifice (2) d'accès à la colonne est délimité au moyen d'un élément (9) de tête assemblable au reste du corps de colonne, cet élément (9) de tête affectant la forme d'une section de conduit tubulaire fermé à l'une de ses extrémités par un couvercle ou tampon (10) de fermeture destiné à être placé au ras du sol.

11. Dispositif selon la revendication 10,
**caractérisé en ce que** l'élément (9) de tête est muni d'une dérivation (5) pour son raccordement à une conduite d'échappement par aspiration.
